# FASCICULE DE BREVET EUROPEEN

(11) **EP 2 757 041 B1**
(45) Date de publication et mention de la délivrance du brevet: **07.02.2018**
(21) Numéro de dépôt: 13196520.4
(22) Date de dépôt: 10.12.2013
(51) Int. Cl.: B64D 11/06

(54) **Dispositif d'assise comprenant un dossier escamotable vers l'avant**
Sitzvorrichtung, die eine nach vorn versenkbare Rückenlehne umfasst
Seat device including a seat back which can be folded forwards

(30) Priorité: 12.12.2012 FR 1261917
(43) Date de publication de la demande: 23.07.2014
(73) Titulaire: Airbus Opérations SAS, 31060 Toulouse (FR)
(72) Inventeur: Guering, Bernard, 31850 MONTRABE (FR)
(74) Mandataire: Fantin, Laurent

(56) Documents cités:
- EP-A1- 1 645 507
- DE-A1- 2 107 231
- GB-A- 2 438 090
- US-A- 3 754 787

## Description

La présente invention est relative à un dispositif d'assise à encombrement réduit, par exemple pour un aéronef.

Dans le secteur aéronautique, certaines compagnies aériennes dites « low-cost » cherchent à augmenter le nombre de passagers transportés lors de chaque vol, et plus particulièrement sur des liaisons à courtes distances, afin de rentabiliser au maximum l'utilisation de l'aéronef.

Dans un tel objectif, et en utilisant le même aéronef ou un aéronef de capacité similaire, il est nécessaire d'augmenter le nombre de sièges en cabine.

Dans tous les cas, cette augmentation du nombre de sièges s'effectue au détriment du confort des passagers.

En effet, pour augmenter le nombre de sièges en cabine, il est nécessaire de diminuer l'espace alloué à chaque passager.

Cependant, cette diminution du confort reste tolérable pour les passagers dans la mesure où le voyage ne dure qu'une ou quelques heures.

Selon une première solution visant à augmenter le nombre de sièges en cabine, il est possible de diminuer la largeur d'assise allouée à chaque passager afin de parvenir à placer un siège supplémentaire dans la largeur de la cabine.

Cette première solution a déjà été poursuivie, et il n'est plus possible aujourd'hui de réduire encore la largeur d'assise, notamment en classe économique.

Selon une deuxième solution visant à augmenter le nombre de sièges en cabine, il est possible de diminuer la distance disponible entre deux sièges, c'est-à-dire la distance nécessaire pour les jambes du passager.

Cette deuxième solution a aussi été poursuivie jusqu'à aujourd'hui, et il est difficilement possible de continuer à réduire encore cette distance entre les sièges en raison de l'augmentation de la taille moyenne des passagers.

Selon une troisième solution visant à augmenter le nombre de sièges en cabine, la conception des sièges doit être optimisée afin que ces derniers présentent un encombrement le plus réduit possible.

Cette troisième solution a aussi été poursuivie par les ingénieurs du secteur aéronautique.

Parallèlement aux développements de ces trois solutions visant à augmenter le nombre de sièges en cabine, les ingénieurs se sont aperçus qu'il devenait de plus en plus difficile pour les passagers d'accéder aux places assises se situant au bout d'une rangée de sièges, côté hublot.

Cette difficulté d'accès est principalement due à la réduction de la distance entre deux sièges, et plus précisément à la réduction de la distance entre l'assise d'un premier siège et le dossier d'un autre siège situé devant le premier. D'autre part, la difficulté d'accès aux places assises situées en bout de rangée provient aussi de la présence des accoudoirs.

Aussi, pour remédier à de telles difficultés d'accès, il est fréquent, dans un aéronef ou dans d'autres moyens de transport de personnes, de prévoir des sièges avec des accoudoirs et une assise relevables, c'est-à-dire montés en rotation de manière à pouvoir être rabattus de bas en haut vers le dossier du siège.

Cette solution connue trouve ses limites lorsque l'on cherche à augmenter le nombre de sièges dans une cabine d'aéronef.

En effet, malgré les nombreuses améliorations apportées aux sièges d'aéronef, l'assise rabattue possède toujours une certaine épaisseur qui reste gênante pour l'accès aux places assises situées en bout de rangée, côté hublot.

De plus, le dossier des sièges à accoudoirs et assise relevables restant fixe, il ne permet de dégager aucun accès aux places assises situées à l'arrière.

Le document DE2107231 décrit un dispositif d'assise à encombrement réduit capable de passer d'une configuration d'utilisation à une configuration escamotée. Selon ce document, le dossier est animé d'un mouvement complexe.

Aussi, la présente invention vise à pallier les inconvénients de l'art antérieur. Dans cette optique, l'invention propose un dispositif d'assise à encombrement réduit pour un aéronef.

Ce dispositif d'assise comprend un support supportant une assise et un dossier, et ce dispositif d'assise peut prendre différentes configurations d'utilisation offrant une place assise, ainsi qu'une configuration escamotée offrant un encombrement réduit.

Et, ce dispositif d'assise se caractérise en ce que l'assise et le dossier du dispositif d'assise sont montés sur un parallélogramme déformable qui comprend un montant avant et un montant arrière reliés par un montant supérieur et un montant inférieur, le montant avant et le montant arrière étant formés respectivement par le support et par le dossier, l'assise étant fixée sur le montant supérieur du parallélogramme déformable de manière à ce que son dossier opère un mouvement de translation circulaire vers l'avant et vers le haut du dispositif lorsque le dispositif d'assise est emmené vers la configuration escamotée.

Grâce à cette cinématique, le dossier permet d'élargir l'accès aux places assises situées à l'arrière lorsque le dispositif d'assise est en configuration escamotée. Il devient aussi possible grâce à cette mobilité particulière du dossier de réduire davantage la distance entre différentes rangées de dispositifs d'assise dans une cabine d'aéronef.

Grâce au mouvement de translation circulaire vers l'avant et vers le haut du dispositif lorsque le dispositif d'assise est escamoté, le dossier se trouve dans le prolongement vertical du support lorsque le dispositif d'assise est en configuration escamotée.

De plus, l'assise bascule en rotation de façon que son extrémité avant se déplace vers le bas et vers l'arrière, et que son extrémité arrière se déplace vers le haut et vers l'avant lorsque le dispositif d'assise est escamoté.

Ainsi, l'assise se trouve entre le dossier et le support, sensiblement dans le prolongement vertical de ces deux éléments, lorsque le dispositif d'assise est en configuration escamotée.

En vue de réduire l'encombrement du dispositif d'assise en configuration escamotée et de réduire la distance nécessaire pour accueillir les jambes des passagers entre deux rangées de dispositifs d'assise, l'assise prend la forme d'une selle de type motocyclette.

Toujours en vue de réduire l'encombrement du dispositif d'assise en configuration escamotée, le dossier prend la forme d'un simple appui lombaire maintenu au bout d'un bras.

De plus, l'assise peut offrir une mobilité en rotation autour d'un axe vertical par rapport au support, et le support peut intégrer des moyens de réglage de la hauteur d'assise, ces caractéristiques permettant de réduire indirectement la distance nécessaire entre deux rangées de dispositifs d'assise.

Pour compléter le confort d'assise du passager, le dispositif d'assise comprend un accoudoir relevable avec un bras monté en rotation autour d'un axe du support.

Avantageusement, cet accoudoir comprend un élément d'appui pour un avant-bras monté sur une glissière à l'extrémité du bras rotatif, ce qui permet de plaquer l'élément d'appui sur le bras pour réduire au maximum l'encombrement de l'accoudoir une fois celui-ci relevé.

La présente invention couvre aussi une structure d'assise comprenant une pièce porteuse, de préférence un tube, sur lequel sont fixés côte à côte plusieurs dispositifs d'assise, ainsi qu'un aéronef comprenant un dispositif d'assise.

D'autres caractéristiques et avantages ressortiront de la description qui va suivre de l'invention, description donnée à titre d'exemple uniquement, en regard des dessins annexés sur lesquels :
- la figure 1 est une vue en perspective d'une structure d'assise comprenant plusieurs dispositifs d'assise, cette vue illustrant l'invention,
- la figure 2 et la figure 3 sont des vues schématiques représentant respectivement un dispositif d'assise en configuration d'assise et en configuration escamotée, cette vue illustrant l'invention,
- la figure 4 est une vue de côté de plusieurs rangées de dispositifs d'assise, cette vue illustrant l'invention,
- la figure 5 est une vue de dessus en perspective de plusieurs rangées de dispositifs d'assise, cette vue illustrant l'invention.

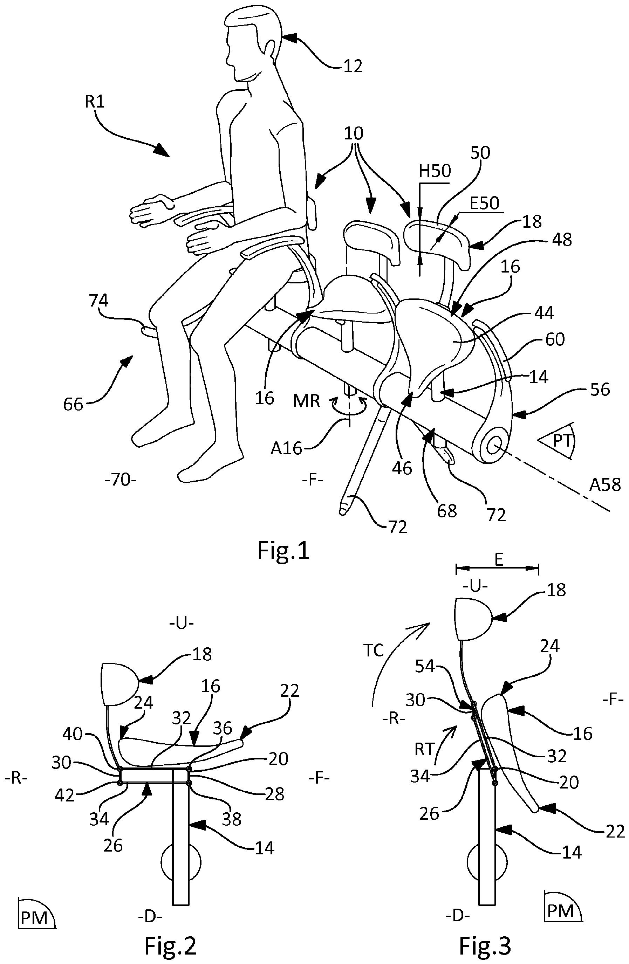

Comme l'illustre la figure 1, la présente invention est relative à un dispositif d'assise 10 à encombrement réduit.

Ce dispositif d'assise 10 est particulièrement destiné à être utilisé dans une cabine d'aéronef pour recevoir un nombre maximal de passagers 12.

Evidemment, cette application aéronautique n'est pas limitative, et le dispositif d'assise 10 selon l'invention pourrait tout à fait être utilisé dans d'autres moyens de transport dans lesquels on souhaite transporter un nombre maximal de passagers, comme les autocars ou les trains.

De façon connue, le dispositif d'assise 10 comprend un support 14 supportant une assise 16 et un dossier 18.

Selon l'invention, le dispositif d'assise 10 peut prendre différentes configurations d'utilisation offrant une place assise, comme celle illustrée par la figure 2, et une configuration escamotée offrant un encombrement réduit, cette configuration escamotée étant illustrée en figure 3.

Plus exactement, une configuration d'utilisation du dispositif 10 offre une assise 16 sensiblement horizontale, les différentes configurations d'utilisation étant liées au réglage en hauteur et au réglage en rotation du dispositif 10 autour d'un axe vertical, comme détaillé ultérieurement.

Ainsi, lorsque le dispositif d'assise 10 est emmené vers la configuration escamotée, son dossier 18 se déplace vers l'avant F du dispositif 10.

Grâce à ce déplacement vers l'avant F, le dossier 18 permet de dégager l'accès aux places assises situées à l'arrière R du dispositif 10.

Plus précisément, le dossier 18 opère un mouvement de translation circulaire TC vers l'avant F et vers le haut U du dispositif 10 lorsque le dispositif d'assise 10 est emmené vers la configuration escamotée.

Par translation circulaire, l'invention entend que le dossier 18 opère un mouvement plan tel que tous les points du dossier 18 ont des trajectoires circulaires de même rayon mais de centres différents.

Ce mouvement de translation circulaire permet de maintenir le dossier 18 dans la même position sensiblement verticale quelle que soit la configuration prise par le dispositif 10.

Ainsi, quelle que soit la configuration prise par le dispositif 10, le dossier 18 fournit un appui lombaire au passager.

Par verticale, on entend une direction allant du bas D du dispositif 10 vers le haut U du dispositif 10, et par horizontale, on entend une direction allant de l'arrière R du dispositif 10 vers l'avant F du dispositif 10.

De préférence, le dossier 18 opère un mouvement de translation circulaire TC dans un plan médian PM du dispositif 10, le plan médian PM séparant le dispositif 10 en deux moitiés droite et gauche.

Grâce à ce mouvement particulier TC, le dossier 18 se retrouve sensiblement dans le prolongement vertical du support 14, ce qui réduit l'encombrement E du dispositif en position escamotée.

Toujours grâce à ce mouvement de translation circulaire TC, le dossier 18 s'éloigne du support 14 pour permettre l'escamotage de l'assise 16.

En effet, selon l'invention, l'assise 16 bascule en rotation RT autour d'un axe 20 du support 14 de façon que son extrémité avant 22 se déplace vers le bas D et vers l'arrière R du dispositif 10, et que son extrémité arrière 24 se déplace vers le haut U et vers l'avant F du dispositif 10 lorsque le dispositif d'assise 10 est emmené vers la configuration escamotée.

Grâce à cette rotation RT, l'assise 16 se retrouve entre le dossier 18 et le support 14 lorsque le dispositif d'assise 10 est en configuration escamotée, ce qui réduit l'encombrement E du dispositif en position escamotée.

Pour réduire au maximum cet encombrement E du dispositif en position escamotée, l'assise 16 se trouve partiellement dans le prolongement vertical du dossier 18 et du support 14 lorsque le dispositif d'assise 10 est en configuration escamotée.

De préférence, l'assise 16 opère son mouvement de rotation RT dans un plan médian PM du dispositif 10, l'axe de rotation 20 étant perpendiculaire au plan médian PM.

Dans un agencement préféré du dispositif 10 d'assise, l'assise 16 et le dossier 18 du dispositif 10 d'assise sont montés sur un parallélogramme déformable 26.

Ce parallélogramme déformable 26 permet d'obtenir mécaniquement et de manière compacte les mouvements spécifiques de l'assise 16 et du dossier 18 décrits ci-dessus.

Ce parallélogramme déformable 26 comprend un montant avant 28 et un montant arrière 30 reliés par un montant supérieur 32 et un montant inférieur 34.

Plus précisément, le montant avant 28 est relié par une articulation avant supérieure 36 au montant supérieur 32, le montant avant 28 est reliée par une articulation avant inférieure 38 au montant inférieur 34, le montant arrière 30 est relié par une articulation arrière supérieure 40 au montant supérieur 32, et le montant arrière 30 est relié par une articulation arrière inférieure 42 au montant inférieur 34.

Dans un agencement préféré du dispositif 10 d'assise, le montant avant 28 et le montant arrière 30 sont formés respectivement par le support 14 et par le dossier 18. On obtient ainsi un agencement très compact du parallélogramme déformable 26, et par voie de conséquence du dispositif d'assise 10.

Toujours dans un agencement préféré du dispositif 10 d'assise, l'assise 16 est fixée sur le montant supérieur 32 du parallélogramme déformable 26.

L'axe 20 du support 14 autour duquel l'assise 16 bascule en rotation RT est donc l'articulation avant supérieure 36 du parallélogramme déformable 26.

Comparativement à un montage sur glissière, le parallélogramme déformable 26 ne nécessite aucune pièce de guidage fixe susceptible de rester en arrière du dossier 18 lorsque le dispositif d'assise 10 est en configuration escamotée.

Avantageusement, le parallélogramme déformable 26 comprend des moyens de rappel, tel un ressort, en configuration escamotée.

En complément de cet agencement du dispositif 10, l'invention prévoit que l'assise 16 prend la forme d'une selle 44 de type motocyclette, les formes de cette selle 44 étant visibles en figure 1.

Cette selle 44 comprend une partie avant 46 plus fine que sa partie arrière 48 et relevée par rapport à la partie arrière 48.

Cette selle 44, offrant un meilleur maintien d'un passager 12 grâce à sa partie avant 46 relevée, permet de surélever l'assise 16 comparativement aux sièges d'aéronef avec une assise parallélépipédique.

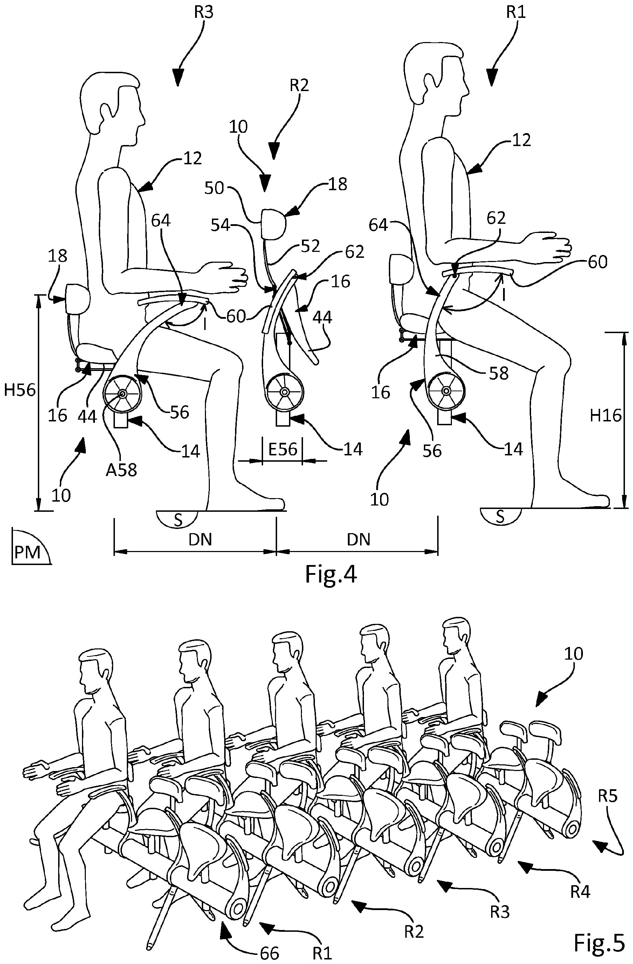

En surélevant l'assise 16, et comme l'illustrent les figures 1 et 4, les jambes du passager 12 sont moins pliées et nécessitent moins d'espace par rapport au siège de devant.

Malgré cette surélévation de l'assise, le passager est assis, et non debout.

Comme l'illustre la figure 4, afin d'adapter le dispositif d'assise 10 à des passagers 12 de morphologies différentes, le support 14 intègre des moyens de réglage, tel un système de vérin à ressort commandé manuellement, de la hauteur d'assise H16.

La hauteur d'assise H16 est définie entre le sol S, par exemple le plancher d'une cabine d'aéronef, et l'assise 16.

Le réglage de la hauteur d'assise H16 permet indirectement de réduire la distance nécessaire DN entre deux rangées de dispositifs 10 d'assise.

En effet, ce réglage permet à chaque passager d'adapter la hauteur d'assise H16 à sa morphologie, et cela évite de prévoir une distance nécessaire DN trop importante pour les passagers de grande taille en leur évitant d'être assis trop bas.

Pour parfaire le confort du passager 12, l'assise 16 peut aussi offrir une mobilité en rotation MR, par exemple de quelques dizaines de degrés, autour d'un axe vertical A16 par rapport au support 14.

Cette mobilité en rotation MR de l'assise 16 autour d'un axe vertical A16 permet aussi indirectement de réduire la distance nécessaire DN entre deux rangées de dispositifs 10 d'assise.

En effet, la rotation MR de l'assise 16 permet au passager de trouver une position plus ergonomique lui évitant de se sentir trop près de son voisin de devant, et, cette rotation MR permet aussi aux passagers de se mouvoir tout en étant assis pour libérer le passage vers les places assises situées près du hublot.

Selon l'invention, le dossier 18 prend la forme d'un appui lombaire 50 maintenu au bout d'un bras 52.

Dans un agencement préféré du dispositif 10 d'assise, la partie inférieure 54 du bras 52 constitue le montant arrière 30 du parallélogramme déformable 26.

Comme illustré en figure 1, l'appui lombaire 50, éventuellement rembourré, suit un profil courbe dans un plan transversal PT du dispositif d'assise 10 de manière à épouser l'anatomie du dos d'un passager, le plan transversal PT séparant le dispositif 10 en deux moitiés haute et basse, et étant perpendiculaire au plan médian PM.

Dans une variante minimale mais suffisante, l'appui lombaire 50 a une hauteur H50 d'une dizaine de centimètres, et une épaisseur E50 de quelques centimètres. Cette variante minimale de l'appui lombaire 50 permet évidemment de limiter l'encombrement E du dispositif d'assise 10, notamment en regard des sièges d'aéronef à dossier parallélépipédique de l'art antérieur.

Pour compléter le confort d'un passager 12, et comme illustré en figure 4, le dispositif d'assise 10 comprend un accoudoir relevable 56 avec un bras 58 monté en rotation autour d'un axe A58 fixe par rapport au support 14.

De façon connue, l'accoudoir relevable 56 est monté à côté de l'assise 16. Et, dans le cas d'une pluralité de dispositifs d'assise 10 formant une rangée, comme l'illustre la figure 1, un accoudoir relevable 56 est prévu de chaque côté de chaque dispositif d'assise 10.

De préférence, l'axe A58 de rotation du bras 58 est perpendiculaire au plan médian PM du dispositif 10.

Mais, l'axe A58 de rotation du bras 58 est distinct de l'axe 20 de rotation de l'assise 16.

L'accoudoir 56 comprend un élément d'appui 60 pour un avant-bras d'un passager 12 monté sur une glissière 62 à l'extrémité supérieure 64 du bras 58.

Avantageusement, le coulissement de l'élément d'appui 60 par rapport au bras 58 définit l'inclinaison I de l'élément d'appui 60 par rapport au bras 58, et il permet de maintenir l'élément d'appui 60 en position sensiblement horizontale.

De plus, la rotation de l'accoudoir 56 en combinaison avec la glissière 62 permet de régler la hauteur H56 de l'accoudoir souhaitée. Et, en faisant tourner le bras 58 de l'accoudoir 56 vers une position plus basse, la glissière 62 permet de conserver l'accoudoir 56 dans une position utilisable située près de l'assise 16.

Toujours grâce à la glissière 62, l'élément d'appui 60 peut être plaqué sur le bras 58 pour réduire au maximum l'encombrement E56 de l'accoudoir 56 lorsqu'il est relevé.

La présente invention couvre aussi une structure d'assise 66, illustrée en figure 1, comprenant une pièce porteuse 68, de préférence un tube, sur laquelle sont fixés côte à côte plusieurs dispositifs d'assise 10 de manière à former une rangée RI de places assises.

Avantageusement, les supports 14 des différents dispositifs d'assise 10 sont intégrés à cette pièce porteuse 68 et les accoudoirs relevables 56 sont directement montés en rotation sur la pièce porteuse 68.

L'invention couvre aussi un aéronef comprenant un dispositif d'assise 10 monté dans sa cabine.

Par exemple, un aéronef comprend plusieurs structures d'assise 66 montées l'une derrière l'autre dans sa cabine de manière à former plusieurs rangées (R1,R2,R3,R4,R5,...) de places assises, comme représenté en figure 5.

A cet effet, la pièce porteuse 68 de chaque structure d'assise 66 est montée sur le plancher 70 de la cabine d'aéronef par l'intermédiaire de bielles 72, et d'un bras latéral 74 reliant la pièce porteuse 68 à la structure de l'aéronef afin de reprendre les efforts de torsion subies par celle-ci.

Aussi, on constate que, en comparaison des sièges d'aéronef de l'art antérieur, le dispositif d'assise 10 selon l'invention offre un encombrement réduit aussi bien quand il est utilisé que lorsque il est escamoté.

De plus, il est possible de réduire la distance nécessaire DN entre deux rangées de places assises tout en préservant le confort des passagers, aussi bien lorsqu'ils sont assis que lorsqu'ils accèdent à leur place.

Pour donner un ordre d'idées, grâce à la conception du dispositif d'assise 10 selon l'invention, il est possible d'obtenir quatre rangées de places assises dans la longueur dans laquelle seulement trois rangées de sièges d'aéronef selon l'art antérieur pouvaient être installées.

## Revendications

1. Dispositif (10) d'assise à encombrement réduit, ce dispositif (10) comprenant un support (14) supportant une assise (16) et un dossier (18), le dispositif (10) d'assise prenant différentes configurations d'utilisation offrant une place assise et une configuration escamotée offrant un encombrement réduit, le dossier (18) se déplaçant vers l'avant (F) du dispositif (10) lorsque le dispositif (10) d'assise est emmené vers la configuration escamotée, le dispositif (10) d'assise étant **caractérisé en ce que** l'assise (16) et le dossier (18) du dispositif (10) d'assise sont montés sur un parallélogramme déformable (26) qui comprend un montant avant (28) et un montant arrière (30) reliés par un montant supérieur (32) et un montant inférieur (34), le montant avant (28) et le montant arrière (30) étant formés respectivement par le support (14) et par le dossier (18), l'assise (16) étant fixée sur le montant supérieur (32) du parallélogramme déformable (26) de manière à ce que le dossier (18) opère un mouvement de translation circulaire (TC) vers l'avant (F) et vers le haut (U) du dispositif (10) lorsque le dispositif (10) d'assise est emmené vers la configuration escamotée.

2. Dispositif (10) d'assise à encombrement réduit selon la revendication précédente, dans lequel l'assise (16) bascule en rotation (RT) autour d'un axe (20) du support (14) de façon que son extrémité avant (22) se déplace vers le bas (D) et vers l'arrière (R) du dispositif (10), et que son extrémité arrière (24) se déplace vers le haut (U) et vers l'avant (F) du dispositif (10) lorsque le dispositif (10) d'assise est emmené vers la configuration escamotée.

3. Dispositif (10) d'assise à encombrement réduit selon l'une des revendications précédentes, dans lequel l'assise prend la forme d'une selle de type motocyclette.

4. Dispositif (10) d'assise à encombrement réduit selon l'une des revendications précédentes, dans lequel le dossier (18) prend la forme d'un appui lombaire (50) maintenu au bout d'un bras (52).

5. Dispositif (10) d'assise à encombrement réduit selon l'une des revendications précédentes, dans lequel l'assise (16) offre une mobilité en rotation (MR) autour d'un axe vertical (A16) par rapport au support (14).

6. Dispositif (10) d'assise à encombrement réduit selon l'une des revendications précédentes, dans lequel le support (14) intègre des moyens de réglage de la hauteur d'assise (H16).

7. Dispositif (10) d'assise à encombrement réduit selon l'une des revendications précédentes, dans lequel, le dispositif (10) d'assise comprenant un accoudoir (56) relevable avec un bras (58) monté en rotation autour d'un axe (A58) fixe par rapport au support (14), l'accoudoir (56) comprend un élément d'appui (60) pour un avant-bras d'un passager (12) monté sur une glissière (62) à l'extrémité supérieure (64) du bras (58).

8. Structure d'assise (66) comprenant une pièce porteuse (68) sur laquelle sont fixés côte à côte plusieurs dispositifs (10) d'assise selon l'une des revendications précédentes de manière à former une rangée (R1) de places assises.

9. Aéronef comprenant au moins un dispositif (10) d'assise selon l'une des revendications 1 à 7 monté dans sa cabine.

## Patentansprüche

1. Sitzvorrichtung (10) mit reduziertem Platzbedarf, wobei die Sitzvorrichtung (10) eine Halterung (14) aufweist, die eine Sitzfläche (16) und eine Rückenlehne (18) hält, und die Sitzvorrichtung (10) verschiedene Stellungen bei der Verwendung einnehmen kann, die einen Sitzplatz bietet, und eine aufgeräumte Stellung einnehmen kann, die einen reduzierten Platzbedarf bietet, wobei sich die Rückenlehne (18) bezüglich der Sitzvorrichtung (10) nach vorne (F) bewegt, wenn die Sitzvorrichtung (10) in die aufgeräumte Stellung gebracht wird, wobei die Sitzvorrichtung (10) **dadurch gekennzeichnet ist, dass** die Sitzfläche (16) und die Rückenlehne (18) der Sitzvorrichtung (10) auf einem verformbaren Parallelogramm (26) angebracht sind, das eine vordere Strebe (28) und eine hintere Strebe (30) umfasst, die durch eine obere Strebe (32) und eine untere Strebe (34) verbunden sind, wobei die vordere Strebe (28) und die hintere Strebe (30) jeweils durch die Halterung (14) und die Rückenlehne (18) gebildet sind, und wobei die Sitzfläche (16) auf der oberen Strebe (32) des verformbaren Parallelogramms (26) derart angebracht ist, dass die Rückenlehne (18) eine kreisförmige Bewegung (TC) nach vorne (F) und oben (U) bezüglich der Sitzvorrichtung (10) ausführt, wenn die Sitzvorrichtung (10) in die aufgeräumte Stellung gebracht wird.

2. Sitzvorrichtung (10) mit reduziertem Platzbedarf nach dem vorhergehenden Anspruch, bei der die Sitzfläche (16) in eine Drehrichtung (RT) um eine Achse (20) der Halterung (14) derart verschwenkt, dass sich ihr vorderes Ende (22) nach unten (D) und nach hinten (R) bezüglich der Sitzvorrichtung (10) bewegt und dass sich ihr hinteres Ende (24) nach oben (U) und nach vorne (F) bezüglich der Sitzvorrichtung (10) bewegt, wenn die Sitzvorrichtung (10) in die aufgeräumte Stellung gebracht wird.

3. Sitzvorrichtung (10) mit reduziertem Platzbedarf nach einem der vorhergehenden Ansprüche, bei der die Sitzfläche als Sattel nach Art eines Motorrads ausgebildet ist.

4. Sitzvorrichtung (10) mit reduziertem Platzbedarf nach einem der vorhergehenden Ansprüche, bei der die Rückenlehne (18) als Lendenstütze (50) ausgebildet ist, die am Ende eines Arms (52) gehalten ist.

5. Sitzvorrichtung (10) mit reduziertem Platzbedarf nach einem der vorhergehenden Ansprüche, bei der die Sitzfläche (16) eine Drehbeweglichkeit (MR) um eine vertikale Achse (A16) bezüglich der Halterung (14) bietet.

6. Sitzvorrichtung (10) mit reduziertem Platzbedarf nach einem der vorhergehenden Ansprüche, bei der die Halterung (14) Einstellmittel für die Sitzhöhe (H16) umfasst.

7. Sitzvorrichtung (10) mit reduziertem Platzbedarf nach einem der vorhergehenden Ansprüche, bei der die Sitzvorrichtung (10) eine Armstütze (56) aufweist, die zusammen mit einem Arm (58) anhebbar ist, der drehbar um eine Achse (A58) gelagert ist, die bezüglich der Halterung (14) fest ist, wobei die Armstütze (56) ein Stützelement (60) für einen Unterarm eines Passagiers (12) aufweist, das auf einer Gleitführung (62) am oberen Ende (64) des Arms (58) angebracht ist.

8. Sitzstruktur (66) mit einer Trageeinrichtung (68), auf der mehrere Sitzvorrichtungen (10) nach einem der vorhergehenden Ansprüche Seite an Seite angebracht sind, um auf diese Weise eine Reihe (R1) von Sitzplätzen zu schaffen.

9. Luftfahrzeug mit wenigstens einer Sitzvorrichtung (10) nach einem der Ansprüche 1 bis 7, die in dessen Kabine aufgestellt ist.

## Claims

1. Seating system (10) with reduced bulk, this system (10) comprising a support (14) supporting a seating (16) and a backrest (18), the seating system (10) assuming different configurations of use offering a seating place and a folded configuration offering a reduced bulk, the backrest (18) being moved towards the front (F) of the system (10) when the seating system (10) is brought to the folded configuration, the seating system (10) being **characterized in that** the seating (16) and the backrest (18) of the seating system (10) are mounted on a deformable parallelogram (26) that comprises a front stay (28) and a rear stay (30) linked by a top stay (32) and a bottom stay (34), the front stay (28) and the rear stay (30) being formed respectively by the support (14) and by the backrest (18), and the seating (16) being fixed to the top stay (32) of the deformable parallelogram (26) so that the backrest (18) describes a circular translational movement (TC) towards the front (F) and upwards (U) of the system (10) when the seating system (10) is brought to the folded configuration.

2. Seating system (10) with reduced bulk according to the preceding claim, in which the seating (16) rotationally tilts (RT) about an axis (20) of the support (14) so that its front end (22) is moved downwards (D) and towards the rear (R) of the system (10), and its rear end (24) is moved upwards (U) and towards the front (F) of the system (10) when the seating system (10) is brought to the folded configuration.

3. Seating system (10) with reduced bulk according to one of the preceding claims, in which the seating takes the form of a motorcycle-type saddle.

4. Seating system (10) with reduced bulk according to one of the preceding claims, in which the backrest (18) takes the form of a lumbar support (50) held at the end of an arm (52).

5. Seating system (10) with reduced bulk according to one of the preceding claims, in which the seating (16) offers a rotational mobility (MR) about a vertical axis (A16) relative to the support (14).

6. Seating system (10) with reduced bulk according to one of the preceding claims, in which the support (14) incorporates means for adjusting the seating height (H16).

7. Seating system (10) with reduced bulk according to one of the preceding claims, in which, the seating system (10) comprising a raisable armrest (56) with an arm (58) rotationally mounted about an axis (A58) that is fixed relative to the support (14), the armrest (56) comprising a support element (60) for a forearm of a passenger (12) mounted on a slideway (62) at the top end (64) of the arm (58).

8. Seating structure (66) comprising a bearing piece (68) on which are fixed, side by side, a plurality of seating systems (10) according to one of the preceding claims so as to form a row (R1) of seating places.

9. Aircraft comprising at least one seating system (10) according to one of Claims 1 to 7 mounted in its cabin.
